# EUROPÄISCHE PATENTSCHRIFT

(11) **EP 3 128 383 B1**
(45) Veröffentlichungstag und Bekanntmachung des Hinweises auf die Patenterteilung: **03.06.2020**
(21) Anmeldenummer: 15306259.1
(22) Anmeldetag: 03.08.2015
(51) Int. Cl.: G05B 19/042, G05B 19/05

(54) **FELDGERÄT**
FIELD DEVICE
APPAREIL DE TERRAIN

(43) Veröffentlichungstag der Anmeldung: 08.02.2017
(73) Patentinhaber: Schneider Electric Industries SAS, 92500 Rueil-Malmaison (FR)
(72) Erfinder: Stefan, Iulia Dana, 97828 Marktheidenfeld (DE)
(74) Vertreter: Manitz Finsterwald Patent- und Rechtsanwaltspartnerschaft mbB

(56) Entgegenhaltungen:
- EP-A1- 2 237 123
- WO-A1-2014/095411
- DE-A1-102006 005 365
- US-A1- 2013 297 928

## Beschreibung

Die vorliegende Erfindung betrifft ein Feldgerät, insbesondere eine Aktorsteuerung, zum Anschließen an eine speicherprogrammierbare Steuerung (SPS). Das Feldgerät umfasst eine Hardware mit einer Recheneinheit, einem Speicher und einer Datenschnittstelle zur Kommunikation mit der SPS.

Feldgeräte werden in automatisierten Prozessen eingesetzt und können beispielsweise als Aktorsteuerungen ausgebildet sein, wobei mittels der Aktorsteuerungen Elektromotoren und dergleichen gesteuert werden. Ebenfalls kann es sich bei dem Feldgerät um eine Sensoranordnung handeln, die Messwerte innerhalb des automatisierten Prozesses erfasst. Die automatisierten Prozesse können z.B. für die Fertigung von Bauteilen verwendet werden, wobei die speicherprogrammierbare Steuerung eine Vielzahl von Feldgeräten ansteuern kann, um den Fertigungsprozess zu kontrollieren.

Bei dem Austausch eines Feldgeräts durch neuere Modelle tritt üblicherweise das Problem auf, dass das neuere Modell mit einer im Vergleich zu dem vorherigen Modell veränderten Firmware ausgestattet ist. Die veränderte Firmware kann beispielsweise andere oder geänderte Funktionen bereitstellen, wobei eine Veränderung des Funktionsumfangs beispielsweise durch eine leistungsfähigere Hardware des neuen Feldgeräts ermöglicht wird. Die gesteigerte Leistungsfähigkeit des neuen Feldgeräts kann beispielsweise durch einen schnelleren Prozessor und/oder durch die Verfügbarkeit von mehr Speichervolumen erreicht werden. Hierbei kann das Problem auftreten, dass eine SPS, welche das Feldgerät steuert, mit der veränderten Firmware und/oder der leistungsfähigeren Hardware des neuen Feldgeräts nicht kompatibel ist. Die SPS "kennt" also weder die neue Hardware, noch die neue Firmware des Feldgeräts.

Erhält ein Feldgerät im Laufe seiner Produktlebensdauer eine neue Hardware (z.B. einen neuen Prozessor / eine neue Recheneinheit), so kann zum einen die Funktionalität der Firmware unverändert belassen werden, um eine Abwärtskompatibilität der Firmware sicherzustellen. Zum anderen kann eine neue FirmwareVersion erstellt werden, die die Möglichkeiten der neuen Hardware ausschöpft. Diese neue Firmwareversion kann dann aber nicht uneingeschränkt mit der bisherigen Firmwareversion kompatibel sein.

Für den Betrieb des Feldgeräts kann in der Folge zwischen mehreren Varianten des Feldgeräts mit unterschiedlichen Firmwareversionen ausgewählt werden, wobei die Auswahl zwischen einer Abwärtskompatibilität oder der Verfügbarkeit neuer Funktionen erfolgen muss. Soll später zwischen diesen Firmwareversionen gewechselt werden, so muss jeweils eine andere Version in den Speicher des Feldgeräts geladen werden, wobei das Feldgerät anschließend neu gestartet (d.h. gebootet) werden muss. Ein solcher Wechsel zwischen verschiedenen Firmwareversionen ist daher relativ aufwändig.

Zur Verwaltung verschiedener Firmwareversionen, die jeweils mit verschiedenen Hardwareversionen des Feldgeräts kompatibel sind, werden häufig Softwareprodukte eingesetzt, die die vorhandene Hardware des Feldgeräts detektieren und mit der benötigten kompatiblen Firmware versorgen. Insbesondere für den Fall, dass zahlreiche Firmwareversionen für verschiedene Hardwareversionen des Feldgeräts vorliegen, steigt der Organisations- und Verwaltungsaufwand für die korrekte Zuordnung zwischen Hardware und Firmware stark an. Auch kann es erforderlich sein, die SPS mit verschiedenen Updates für die verschiedenen Hard- und Firmwareversionen auszustatten.

Aus der US 2013/0297928 A1 ist ein Feldgerät gemäß dem Oberbegriff des Anspruchs 1 bekannt.

Es ist die der Erfindung zugrundeliegende Aufgabe, ein Feldgerät anzugeben, welches mit geringem Aufwand an veränderte Firmwareanforderungen anpassbar ist.

Diese Aufgabe wird durch ein Feldgerät gemäß Anspruch 1 und insbesondere dadurch gelöst, dass das Feldgerät ausgebildet ist, Kompatibilitätsinformationen zu empfangen und dass in dem Speicher eine Firmware mit einer Vielzahl von Funktionen zum Betreiben des Feldgeräts gespeichert ist, wobei erfindungsgemäß die Recheneinheit ausgebildet ist, in Abhängigkeit der Kompatibilitätsinformationen eine Teilmenge der Funktionen der Firmware zur Ausführung freizugeben, um ein Verhalten des Feldgeräts zu erzeugen, das an die Kompatibilitätsinformationen angepasst ist.

Erfindungsgemäß umfasst das Feldgerät eine Firmware, die auch als "Kompatibilitäts-Firmware" bezeichnet werden kann. Die Kompatibilitäts-Firmware kann Funktionen enthalten, welche sowohl eine Abwärtskompatibilität des Feldgeräts ermöglichen, als auch die Leistungsfähigkeit der Hardware des Feldgeräts vollständig ausnutzen können. Dies bedeutet, dass die Firmware mit einer Teilmenge der Funktionen ein Verhalten des Feldgeräts abbilden kann, das beispielsweise einer vorangegangenen Version des Feldgeräts bzw. dessen Firmware entspricht. Eine andere Teilmenge der Funktionen der Firmware wiederum erlaubt es, das Leistungspotential der Hardware des Feldgeräts möglichst gut auszuschöpfen, auch wenn diese Funktionen in vorangegangenen Versionen des Feldgeräts noch nicht verfügbar oder möglich waren. Die Teilmengen können einen Teil ihrer Funktionen gemeinsam haben, d.h. die gemeinsamen Funktionen bilden eine Schnittmenge. Die gemeinsamen Funktionen können nur einmal in der Firmware vorhanden sein, wodurch sich Speicherplatz einsparen lässt.

Anders ausgedrückt können in der Kompatibilitäts-Firmware die Funktionen aus mehreren vorangegangenen Firmwareversionen vereint sein, beispielsweise die

Funktionen von vorangegangenen Versionen V1.0, V2.0, V3.0 und V4.0. Funktionen, die in diesen Versionen identisch vorliegen, können in der Firmware nur einmalig vorliegen. Mittels der Kompatibilitätsinformationen kann dann ausgewählt werden, ob sich das Feldgerät z.B. nach V2.0 oder nach V4.0 verhalten soll.

Zu diesem Zweck kann mittels der Kompatibilitätsinformationen eine entsprechende Teilmenge der Funktionen der Firmware ausgewählt und zur Ausführung freigegeben werden.

Die Kompatibilitätsinformationen können beispielsweise von der SPS an das Feldgerät gesendet werden und an dem Feldgerät insbesondere über die Datenschnittstelle empfangen werden. Alternativ können die Kompatibilitätsinformationen auch bei der Inbetriebnahme des Feldgeräts z.B. mittels eines Datenspeichers (z.B. USB-Stick) an das Feldgerät übermittelt werden.

Werden beispielsweise über die Datenschnittstelle Kompatibilitätsinformationen empfangen, mit welchen die SPS das Feldgerät anweist, sich wie eine vorangegangene Version des Feldgeräts zu verhalten, so wird aus der Vielzahl der Funktionen der Firmware diejenige Teilmenge der Funktionen ausgewählt und zur Ausführung freigegeben, die in der vorangegangenen Version des Feldgeräts bereits verfügbar waren. Auf diese Weise kann das Verhalten des früheren Feldgeräts, insbesondere hinsichtlich des von außerhalb sichtbaren Verhaltens und/oder des Echtzeitverhaltens, exakt nachgebildet werden. Hierbei ist von Vorteil, dass beispielsweise bei zertifizierten Produktionsprozessen (z.B. im Pharma-Bereich) eine vollständige neue Zertifizierung bei einem Ersatz des Feldgeräts durch eine neuere Version, vermieden werden kann.

Alternativ kann die SPS mittels der Kompatibilitätsinformationen dem Feldgerät mitteilen, dass das Feldgerät die neuesten Funktionen der Kompatibilitäts-Firmware zur Verfügung stellen soll. In einem solchen Fall wird eine Teilmenge der Funktionen der Firmware zur Ausführung freigegeben, die die jeweils aktuellen Funktionen der Kompatibilitäts-Firmware umfasst, welche in dem obigen Beispiel den Funktionen der Version V4.0 entsprechen. Sämtliche Funktionen der Kompatibilitäts-Firmware können das gleiche Echtzeitverhalten aufweisen, was z.B. eine Kompatibilität bei Datenübertragungen sicherstellt.

Erfindungsgemäß umfasst die Firmware des Feldgeräts also mehr Funktionen als eine herkömmliche Firmware eines solchen Feldgeräts, was die Ausführung verschiedener Teilmengen der Funktionen erlaubt, wodurch ein unterschiedliches Verhalten des Feldgeräts erzeugt werden kann.

Bei der Datenschnittstelle kann es sich bevorzugt um eine Feldbusschnittstelle handeln, z.B. um eine SERCOS 3-Schnittstelle oder eine CAN-(Controller Area Network)-Schnittstelle.

Unter einer Firmware wird erfindungsgemäß ein Computerprogramm verstanden, welches die Verwendung der Hardware des Feldgeräts gestattet. Die Firmware ist insbesondere in einem Flash-Speicher oder einem ROM (Read Only Memory - z.B. EPROM, EEPROM) gespeichert und dient als Schnittstelle zu einer Software des Feldgeräts. Die Firmware kann beim Starten des Feldgeräts ("booten") in einen Arbeitsspeicher (RAM - Random Access Memory) geladen werden.

Aufgrund der Bereitstellung sämtlicher Funktionen, die zur Erzeugung der verschiedenen Verhaltensweisen des Feldgeräts notwendig sind, mittels einer einzigen Firmware wird eine schnelle Umschaltung zwischen verschiedenen Teilmengen im Betrieb des Feldgeräts ermöglicht. Insbesondere muss die Firmware des Feldgeräts nicht neu geladen werden, zudem kann kein Neustart bzw. kein Booten des Feldgeräts benötigt werden.

Verschiedene Teilmengen der Funktionen der Firmware können also vollständig verschiedenen (vorangegangenen) Firmwareversionen einer herkömmlichen Firmware entsprechen. Mittels des erfindungsgemäßen Feldgeräts kann somit im Betrieb auf einfache Weise zwischen verschiedenen "Firmwareversionen" (d.h. verschiedenen Teilmengen aus dem Pool aller Funktionen des Feldgerätes, welche ein unterschiedliches Verhalten des Feldgeräts erzeugen) hin- und hergeschaltet werden. Die Notwendigkeit für zusätzliche Tools, die eine korrekte Zuordnung zwischen Hardware und Firmware ermöglichen, kann dadurch entfallen. Eine einmal ausgewählte Teilmenge der Funktionen kann in dem Feldgerät gespeichert und solange verwendet werden, bis das Feldgerät mittels der Kompatibilitätsinformationen neu konfiguriert wird. Insbesondere kann die ausgewählte Teilmenge auch nach einem Neustart des Feldgeräts weiter verwendet werden.

Zudem ist von Vorteil, dass der Test- und Validierungsaufwand für neue Firmwareversionen stark reduziert werden kann. Neue Funktionen können einfach in die bestehende Kompatibilitäts-Firmware integriert werden, wobei die neuen Funktionen in Abhängigkeit der Kompatibilitätsinformationen einer bestimmten Teilmenge zugewiesen werden können. Die neuen Funktionen können also durch die Kompatibilitätsinformationen zur Ausführung freigeschaltet werden. Dies bedeutet, dass für die zusätzliche Integration neuer Funktionen die Kompatibilitäts-Firmware nicht vollständig neu getestet und validiert werden muss. Vielmehr reicht es aus, die Integration der neuen Funktionen zu überprüfen.

Weiterhin ergibt sich der Vorteil, dass beim Einsatz erfindungsgemäßer Feldgeräte automatisierte Anlagen über längere Zeiträume unverändert betrieben werden können, da selbst bei Veränderungen an einem Feldgerät (d.h. an dessen Hardware oder Firmware) über die Auswahl einer entsprechenden Teilmenge das bisherige Verhalten des Feldgeräts auch weiterhin erzeugt werden kann. Insbesondere können beispielsweise eine Vielzahl von (herkömmlicherweise benötigten) Firmwareversionen in der einen Kompatibilitäts-Firmware des Feldgeräts abgebildet werden, wobei die Firmware sämtliche Funktionen der vorangegangenen Firmwareversionen umfassen kann (z.B. neben einer Version V4.0 auch die erwähnten Versionen V1.0, V2.0 und V3.0). Mittels der Kompatibilitätsinformationen kann dann ausgewählt werden, welche Teilmenge der Funktionen der Firmware zur Ausführung freigegeben wird, wodurch das Verhalten einer (beliebigen) früheren Firmware bzw. Firmwareversion emuliert werden kann.

Der Nutzer des Feldgeräts kann das Feldgerät also in einem Kompatibilitätsmodus betreiben, der das Verhalten einer früheren Firmwareversion bzw. eines früheren Feldgeräts zur Verfügung stellt. Ebenfalls kann der Nutzer auswählen, dass das Feldgerät sich wie eine neuere oder die neueste Version verhält (Version V4.0 in dem gewählten Beispiel). Auf diese Weise kann der Nutzer das Feldgerät vielseitig einsetzen. Insbesondere ist das Feldgerät nicht auf einen Kompatibilitätsmodus beschränkt sondern kann eine Vielzahl verschiedener Kompatibilitätsmodi umfassen. Jeder Kompatibilitätsmodus kann eine vorbestimmte Teilmenge aller Funktionen der Kompatibilitäts-Firmware verwenden, welche einer bestimmten früheren Firmwareversion entspricht.

Bevorzugte Ausführungsformen der Erfindung sind der Beschreibung, den Zeichnungen sowie den Unteransprüchen zu entnehmen.

Gemäß einer ersten vorteilhaften Ausführungsform ist die Recheneinheit ausgebildet, die freigegebenen Funktionen derart auszuwählen, dass die freigegebenen Funktionen mittels der SPS angesteuert und genutzt werden können. Dies bedeutet, dass nur Funktionen freigegeben werden, die der SPS bekannt sind und dementsprechend auch von der SPS verwendet werden können. Hierzu kann in dem Feldgerät ein Verzeichnis und/oder eine Nachschlagetabelle vorliegen, in der die zu einer jeweiligen Kompatibilitätsinformation passende Teilmenge der Funktionen der Firmware gespeichert ist.

Gemäß einer weiteren vorteilhaften Ausführungsform ist die Recheneinheit ausgebildet, nicht freigegebene Funktionen zu sperren. Eine Ausführung der nicht freigegebenen Funktionen wird also verhindert, wodurch beispielsweise ein zertifiziertes Verhalten erhalten bleiben kann. Die Recheneinheit kann auch ausgebildet sein, zu erkennen, welche Funktionen die vorhandene Hardware des Feldgeräts unterstützt und nicht unterstützte Funktionen der Kompatibilitäts-Firmware von der Ausführung ausschließen.

Bevorzugt ist die Recheneinheit ausgebildet, die zur Ausführung freigegebene Teilmenge der Funktionen während des Betriebs des Feldgeräts auszuwählen. Die Auswahl der Teilmenge kann in der Folge im laufenden Betrieb des Feldgeräts erfolgen, d.h. ohne Booten.

Besonders bevorzugt ist die Recheneinheit ausgebildet, die zur Ausführung freigegebene Teilmenge der Funktionen während des Betriebs des Feldgeräts zu ändern. Es kann im Betrieb folglich zwischen verschiedenen Teilmengen umgeschaltet werden. Eine Umschaltung zwischen verschiedenen Teilmengen kann dabei nur wenige Millisekunden in Anspruch nehmen. Dies kann eine sogenannte "Hot Swap"-Funktionalität ermöglichen.

Gemäß einer weiteren vorteilhaften Ausführungsform enthalten die Kompatibilitätsinformationen eine Versionsinformation der SPS. Die Versionsinformation kann beispielsweise Hardware-, Software- und Firmwareinformationen der SPS umfassen. Anhand der Kompatibilitätsinformationen kann das Feldgerät ermitteln, welche Funktionen der Firmware des Feldgeräts der SPS bekannt sind und eine entsprechende Teilmenge der Funktionen zur Ausführung freigeben. Beispielsweise kann das Feldgerät feststellen, dass die SPS fünf Jahre alt ist und der Firmware-Stand der SPS seit Inbetriebnahme nicht erneuert wurde. Das Feldgerät kann dann eine Teilmenge der Funktionen der Firmware zur Ausführung freigeben, bei welcher sämtliche Funktionen zumindest fünf Jahre alt sind, so dass sichergestellt ist, dass die SPS sämtliche freigegebenen Funktionen des Feldgeräts auch verwenden kann. Auf diese Weise kann zudem sichergestellt werden, dass das Feldgerät auch bezüglich seines Verhaltens und Timings, insbesondere bezüglich seiner Funkschnittstellen und seines Echtzeitverhaltens, dem von der SPS gewohnten Verhalten entspricht.

Gemäß einer weiteren vorteilhaften Ausführungsform enthalten die Kompatibilitätsinformationen eine gewünschte Version des Feldgeräts. Die SPS kann dem Feldgerät mitteilen, wie es agieren soll bzw. welche Version des Feldgeräts es emulieren soll. Beispielsweise kann eine SPS, welche eine aktuelle Firmware umfasst, das Feldgerät anweisen, sich wie ein fünf Jahre altes Feldgerät zu verhalten, d.h. lediglich die Funktionen der Firmware zur Ausführung freizugeben, die bereits vor fünf Jahren existiert haben.

Besonders bevorzugt verwenden sämtliche Funktionen der Firmware denselben Firmwarekern (Kernel). Dies bedeutet, dass sämtliche Funktionen der Firmware auf demselben Kernel aufsetzen bzw. von demselben Kernel ausgeführt werden. Hierbei ist von Vorteil, dass der Kernel auch bei der Hinzufügung neuer Funktionen gleich bleiben kann, weshalb sich der Test- und Validierungsaufwand beim Hinzufügen neuer Funktionen deutlich reduzieren kann. Zudem ist die Firmware nach dem Hinzufügen neuer Funktionen, welche auf demselben Firmwarekern basieren, oft nur geringfügig größer (d.h. um wenige Prozent größer als die bisherige Firmware), da sich nur Änderungen für die neuen Funktionen ergeben.

Durch die Verwendung desselben Kernels können auch die Kosten und der Aufwand für die Implementierung neuer Funktionen gegenüber der Erstellung vollständig neuer Firmwareversionen deutlich gesenkt werden.

Gemäß einer weiteren vorteilhaften Ausführungsform verwenden sämtliche Funktionen der Firmware dieselbe Hardwareabstraktionsschicht (Hardware-Abstraction-Layer - HAL). Die Hardwareabstraktionsschicht bildet das Bindeglied zwischen den Funktionen der Firmware und der Hardware des Feldgeräts, wobei die Hardwareabstraktionsschicht Bestandteil der Firmware sein kann. Unterschiedliche Hardwareversionen des Feldgeräts können unterschiedliche Hardwareabstraktionsschichten aufweisen, wobei aber die Funktionen der Firmware unverändert bleiben können. Zur Veränderung der Hardware des Feldgeräts kann es daher ausreichen, nur die Hardwareabstraktionsschicht entsprechend abzuändern. Der Entwicklungs- und Kostenaufwand für die Veränderung der Hardware des Feldgeräts kann auf diese Weise gering gehalten werden.

Bevorzugt ist zumindest einer und insbesondere jeder der Funktionen der Firmware eine Versionsnummer und/oder ein Datum zugeordnet. Die Versionsnummer kann angeben, aus welcher Version oder Revision des Feldgeräts eine jeweilige Funktion stammt. Anhand des Datums kann ermittelt werden, zu welchem Zeitpunkt eine jeweilige Funktion der Kompatibilitäts-Firmware hinzugefügt worden ist oder wann die jeweilige Funktion erstellt wurde. Die Freigabe der Funktionen kann dann insbesondere anhand der Versionsnummer und/oder anhand des Datums erfolgen.

Wird beispielsweise mittels der Kompatibilitätsinformationen angefordert, das Verhalten des Feldgeräts so anzupassen, dass ein fünf Jahre altes Feldgerät emuliert wird, so können auf einfache Weise diejenigen Funktionen freigegeben werden, die ein Datum aufweisen, welches zumindest fünf Jahre in der Vergangenheit liegt.

Gemäß einer bevorzugten Ausführungsform ist die Recheneinheit ausgebildet, die Funktionen mittels einer Bedingungsabfrage und/oder mittels einer Auswahl einer Vererbung freizugeben. Die Funktionen können mittels If-Then-Else-Anweisungen nacheinander überprüft werden, wobei beispielsweise die bereits genannte Versionsnummer oder ein Datum zur Auswahl und Freigabe der jeweiligen Funktion genutzt werden kann. Alternativ oder zusätzlich können auch objektorientierte Mechanismen verwendet werden, wobei insbesondere jeweils eine entsprechende Vererbung einer Funktion anhand der Kompatibilitätsinformationen ausgewählt und freigegeben wird.

Sämtliche Schritte, welche zu einer Ausführung einer Teilmenge der Funktionen der Kompatibilitäts-Firmware führen, basieren also auf Informationen, nämlich den Kompatibilitätsinformationen, welche das Feldgerät von außerhalb (z.B. von der SPS) erhält.

Gemäß einer weiteren vorteilhaften Ausführungsform ist die Recheneinheit ausgebildet, für den Fall, dass keine der Funktionen geeignet ist, ein an die Kompatibilitätsinformationen angepasstes Verhalten des Feldgeräts zu erzeugen, eine weitere Firmware herunterzuladen und den Betrieb des Feldgeräts mit der weiteren Firmware fortzusetzen. Dies bedeutet, für den Fall, dass in der Kompatibilitäts-Firmware keine geeigneten Funktionen vorhanden sind, kann eine weitere Firmware herunter geladen werden. Die weitere Firmware kann auch als Performance-Firmware bezeichnet werden. Die Performance-Firmware kann Funktionen enthalten, die nicht in die Kompatibilitäts-Firmware integrierbar sind. Damit kann die Performance-Firmware in dem vorigen Beispiel einer Version V5.0 entsprechen.

Bei der Erstellung der Performance-Firmware können also keine Einschränkungen ("Constraints") hinsichtlich der Optimierung von Echtzeitfähigkeit und Timing des Feldgeräts bestehen. Die Performance-Firmware kann insbesondere auch an eine Hardware des Feldgeräts angepasst sein, die besonders leistungsfähig ist.

Stellt die Recheneinheit also fest, dass mit den Funktionen der Kompatibilitäts-Firmware das mittels der Kompatibilitätsinformationen angeforderte Verhalten des Feldgeräts nicht erzeugbar ist, so kann z.B. mit einem Bootloader die Performance-Firmware in das Feldgerät geladen werden.

Die Performance-Firmware kann über eine Datenverbindung (z.B. Ethernet) von einem externen Speichermedium oder von einem internen Speicher des Feldgeräts geladen werden.

Nach dem Laden der Performance-Firmware kann die Performance-Firmware die Kompatibilitäts-Firmware ersetzten, wofür insbesondere ein Neustart (ein Booten) des Feldgeräts erforderlich ist. Anschließend kann der Betrieb des Feldgeräts mit der Performance-Firmware fortgesetzt werden.

Bevorzugt umfasst die weitere Firmware ausschließlich an die Hardware des Feldgeräts angepasste weitere Funktionen. Anders ausgedrückt können die weiteren Funktionen der Performance-Firmware speziell für die Hardware des Feldgeräts entwickelt sein, ohne auf Einschränkungen früherer Hardwareversionen Rücksicht nehmen zu müssen. Mit der Performance-Firmware kann somit ein Optimum bezüglich Timing und Echtzeitverhalten des Feldgeräts erreicht werden.

Die weiteren Funktionen können beispielsweise immer alle zugleich zur Ausführung freigegeben sein. Dies bedeutet, dass bei der Performance-Firmware, im Gegensatz zu der Kompatibilitäts-Firmware, keine Freigabe nur von Teilmengen erfolgen kann. Alternativ kann auch bei der Performance-Firmware eine Freigabe von Teilmengen der in der Performance-Firmware enthaltenen Funktionen erfolgen.

Gemäß einer weiteren vorteilhaften Ausführungsform umfasst die weitere Firmware einen zu der Kompatibilitäts-Firmware unterschiedlichen Firmwarekern und/oder eine unterschiedliche Hardwareabstraktionsschicht. Mittels des Firmwarekerns und der Hardwareabstraktionsschicht kann insbesondere einer aktuellen Hardware des Feldgeräts Rechnung getragen werden, wodurch Einschränkungen z.B. der Kompatibilitäts-Firmware aufgehoben werden können.

Die Erfindung betrifft weiterhin ein Verfahren zum Anschließen eines Feldgeräts an eine speicherprogrammierbare Steuerung (SPS), wobei das Feldgerät eine Firmware mit einer Vielzahl von Funktionen umfasst, wobei das Feldgerät mittels einer Datenschnittstelle Kompatibilitätsinformationen von der SPS empfängt und in Abhängigkeit der Kompatibilitätsinformationen eine Teilmenge der Funktionen der Firmware zur Ausführung freigegeben wird, um ein Verhalten des Feldgeräts zu erzeugen, das an die Kompatibilitätsinformationen der SPS angepasst ist.

Auch betrifft die Erfindung ein Computerprogramm mit Programmcode-Mitteln, die derart eingerichtet sind, dass ein Verfahren der vorgenannten Art durchgeführt wird, wenn das Programm auf einem Feldgerät ausgeführt wird. Bei dem Computerprogramm handelt es sich um die Firmware.

Weiterhin umfasst die Erfindung ein Computerprogrammprodukt mit Programmcodemitteln, die auf einem computerlesbaren Datenträger gespeichert sind und derart eingerichtet sind, dass ein Verfahren der vorstehenden Art durchgeführt wird, wenn das Programmprodukt auf einem Feldgerät ausgeführt wird.

Außerdem betrifft die Erfindung eine speicherprogrammierbare Steuerung (SPS), welche eine Datenschnittstelle umfasst und ausgebildet ist mittels der Datenschnittstelle Kompatibilitätsinformationen an ein Feldgerät zu übermitteln, um ein Verhalten des Feldgeräts zu erzeugen, das an die Kompatibilitätsinformationen angepasst ist.

Ferner umfasst die Erfindung ein System mit zumindest einem Feldgerät und einer SPS der jeweils oben erläuterten Art.

Zuletzt betrifft die Erfindung ein Set von zumindest zwei Feldgeräten der oben erläuterten Art, bei welchem die Feldgeräte jeweils eine unterschiedliche Hardware umfassen aber die gleichen Funktionen zum Betreiben des Feldgeräts aufweisen. Die Firmware der Feldgeräte des Sets kann sich insbesondere nur in ihrer Hardwareabstraktionsschicht unterscheiden. Durch die Auswahl einer gleichen Teilmenge an Funktionen können sich die Feldgeräte von außen betrachtet gleich verhalten.

Zu dem erfindungsgemäßen Verfahren, dem erfindungsgemäßen Computerprogramm, dem erfindungsgemäßen Computerprogrammprodukt, der erfindungsgemäßen SPS, dem erfindungsgemäßen System und dem erfindungsgemäßen Set dieser Bestandteile gelten die zu dem erfindungsgemäßen Feldgerät getroffenen Aussagen entsprechend, insbesondere hinsichtlich Vorteilen und bevorzugten Ausführungsformen.

Nachfolgend wird die Erfindung rein beispielhaft unter Bezugnahme auf die beigefügten Zeichnungen beschrieben. Es zeigen:
- Fig. 1: den schematischen Aufbau eines erfindungsgemäßen Feldgeräts; und
- Fig. 2: eine speicherprogrammierbare Steuerung mit mehreren angeschlossenen erfindungsgemäßen Feldgeräten.

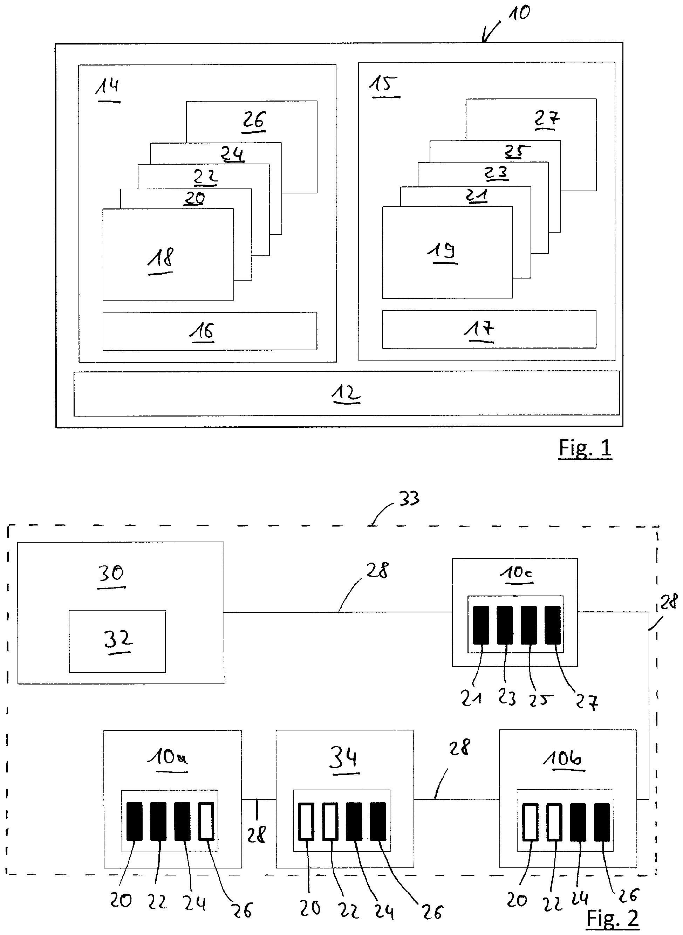

Fig. 1 zeigt ein Feldgerät 10, welches als Motorsteuerung (sogenannter "Drive") ausgebildet ist. Das Feldgerät 10 weist eine Hardware 12 auf, die eine (nicht gezeigte) Recheneinheit umfasst. Mittels der Hardware 12 wird eine Kompatibilitäts-Firmware 14 ausgeführt. Die Kompatibilitäts-Firmware 14 erlaubt es, einen an das Feldgerät 10 angeschlossenen Elektromotor (nicht gezeigt) zu betreiben. Zum Betrieb des Elektromotors erhält das Feldgerät 10 Steuerbefehle mittels einer (ebenfalls nicht gezeigten Datenschnittstelle).

Die Kompatibilitäts-Firmware 14 umfasst eine Hardwareabstraktionsschicht 16, die an die Hardware 12 angepasst ist. Die Kompatibilitäts-Firmware 14 umfasst ferner einen Kernel 18, der eine Basisfunktionalität zur Verfügung stellt.

Eine weitergehende Funktionalität der Kompatibilitäts-Firmware 14 wird durch eine Vielzahl von Funktionen bereitgestellt, wobei in den Figuren beispielhaft eine erste Funktion 20, eine zweite Funktion 22, eine dritte Funktion 24 und eine vierte Funktion 26 gezeigt sind. Die Funktionen 20, 22, 24, 26 können beispielsweise dazu dienen, komplexe Bewegungsabläufe des Elektromotors auf einfache Weise anzusteuern.

Die vier Funktionen 20, 22, 24, 26 erlauben die Bildung von maximal 15 Teilmengen. Das Feldgerät 10 kann in der Folge 15 verschiedene Verhalten abbilden.

Die dritte Funktion 24 und die vierte Funktion 26 wurden von einem Feldgerät übernommen, welches einen Vorgänger des gezeigten Feldgeräts 10 darstellt und dessen Hardware weniger leistungsfähig als die gezeigte Hardware 12 war. Die erste Funktion 20 und die zweite Funktion 22 benötigen die leistungsfähigere Hardware 12 der gezeigten Version des Feldgeräts 10.

Anstelle der Kompatibilitäts-Firmware 14 kann mittels eines (nicht gezeigten) Bootloaders auch eine Performance-Firmware 15 in das Feldgerät 10 geladen werden und die Kompatibilitäts-Firmware 14 ersetzen. Die Performance-Firmware 15 nutzt die Hardware 12 hinsichtlich Timing und Echtzeitfähigkeit optimal aus.

Die Performance-Firmware 15 umfasst eine alternative Hardwareabstraktionsschicht 17 und einen alternativen Kernel 19. Zudem umfasst die Performance-Firmware 15 eine alternative erste Funktion 21, eine alternative zweite Funktion 23, eine alternative dritte Funktion 25 und eine alternative vierte Funktion 27. Die alternativen Funktionen 21, 23, 25, 27 werden gemeinsam zur Ausführung freigegeben.

Fig. 2 zeigt vier Feldgeräte, welche mittels einer Datenverbindung 28, z.B. mittels eines Feldbusses, mit einer speicherprogrammierbaren Steuerung (SPS) 30 verbunden sind. Die SPS 30 weist eine SPS-Firmware 32 auf, welche eine aktuelle SPS-Firmware 32 ist. Dies bedeutet, dass die SPS-Firmware 32 in der Lage ist, die erste, zweite, dritte und vierte Funktion 20, 22, 24, 26 sowie die alternative erste, zweite, dritte und vierte Funktion 21, 23, 25, 27 zu verwenden. Die SPS 30 und die Feldgeräte bilden ein System 33.

Bei den an die SPS 30 angeschlossenen Feldgeräten handelt es sich um ein Feldgerät 10a, ein Feldgerät 10b und ein Feldgerät 10c, welche jeweils dieselbe Hardware 12 aufweisen, wie das in Fig. 1 gezeigte Feldgerät 10. Ein weiteres Feldgerät 34 weist gegenüber dem Feldgerät 10 von Fig. 1 eine ältere und weniger leistungsfähige Hardware auf.

Die Feldgeräte 10, 10a, 10b, 34 umfassen denselben Kernel 18 und dieselben Funktionen 20, 22, 24, 26. Das Feldgerät 10c umfasst die Performance-Firmware 15. Das weitere Feldgerät 34 weist im Vergleich zu den Feldgeräten 10, 10a, 10b aufgrund seiner unterschiedlichen Hardware eine veränderte Hardwareabstraktionsschicht 16 auf.

In Fig. 2 sind diejenigen Funktionen 20, 22, 24, 26 schwarz ausgefüllt dargestellt, die zur Ausführung freigegeben sind. Bei dem Feldgerät 10a sind also die erste, die zweite und die dritte Funktion 20, 22, 24 freigegeben. Bei dem Feldgerät 10b sowie bei dem weiteren Feldgerät 34 sind jeweils nur die dritte Funktion 24 und die vierte Funktion 26 freigegeben.

Eine derartige Freigabe kann beispielsweise dadurch erreicht werden, dass die SPS 30 an das Feldgerät 10a Kompatibilitätsinformationen überträgt, die das Feldgerät 10a anweisen, die neuesten Funktionen 20, 22, 24 zur Verfügung zu stellen.

Das Feldgerät 10b und das weitere Feldgerät 34 hingegen sind angewiesen worden, diejenige Funktionalität zur Verfügung zu stellen, die mit der Hardware des weiteren Feldgeräts 34 ausführbar ist. Dementsprechend werden auf dem Feldgerät 10b und dem weiteren Feldgerät 34 nur die dritte und vierte Funktion 24, 26 ausgeführt.

Das Feldgerät 10b kann auf diese Weise ein Feldgerät ersetzen, welches dem weiteren Feldgerät 34 entspricht, da die Funktionalität des Feldgeräts 10b einem solchen Feldgerät entsprechen kann. Das Verhalten eines weiteren Feldgeräts 34 kann auf diese Weise durch das Feldgerät 10b nachgeahmt werden, wofür das Feldgerät 10b in einem sogenannten Kompatibilitätsmodus betrieben werden kann. Vorteilhafterweise kann nach einem derartigen Ersetzen eines älteren Feldgeräts das Feldgerät 10b ohne Änderungen an der Programmierung der SPS 30 nahtlos die Funktion und das Verhalten des älteren Feldgeräts übernehmen. Eine Interaktion eines Benutzers ist hierfür nicht erforderlich, ebenfalls muss die SPS 30 nicht zwischen neueren Feldgeräten (den Feldgeräten 10a, 10b) und älteren Feldgeräten (dem weiteren Feldgerät 34) unterscheiden.

Das Feldgerät 10c ist von der SPS 30 angewiesen worden, die Performance-Firmware 15 mittels der Datenverbindung 28 von einem (nicht gezeigten) Datenspeicher herunterzuladen und zu verwenden. Das Feldgerät 10c kann mit der Performance-Firmware 15 eine maximale Leistung aus der Hardware 12 herausholen.

### Bezugszeichenliste

- 10, 10a, 10b, 10c: Feldgerät
- 12: Hardware
- 14: Kompatibilitäts-Firmware
- 15: Performance-Firmware
- 16: Hardwareabstraktionsschicht
- 17: alternative Hardwareabstraktionsschicht
- 18: Kernel
- 19: alternativer Kernel
- 20: erste Funktion
- 21: alternative erste Funktion
- 22: zweite Funktion
- 23: alternative zweite Funktion
- 24: dritte Funktion
- 25: alternative dritte Funktion
- 26: vierte Funktion
- 27: alternative vierte Funktion
- 28: Datenverbindung
- 30: SPS
- 32: SPS-Firmware
- 33: System
- 34: weiteres Feldgerät

## Patentansprüche

1. Feldgerät (10), insbesondere Aktorsteuerung, zum Anschließen an eine speicherprogrammierbare Steuerung, SPS (30), mit einer Hardware (12), umfassend
eine Recheneinheit, einen Speicher und eine Datenschnittstelle zur Kommunikation mit der SPS (30),
wobei das Feldgerät (10) ausgebildet ist, Kompatibilitätsinformationen zu empfangen, und
in dem Speicher eine Firmware (14) mit einer Vielzahl von Funktionen (20, 22, 24, 26) zum Betreiben des Feldgeräts (10) gespeichert ist,
**dadurch gekennzeichnet, dass**
die Recheneinheit ausgebildet ist, in Abhängigkeit der Kompatibilitätsinformationen eine Teilmenge der Funktionen (20, 22, 24, 26) der Firmware (14) zur Ausführung freizugeben, um ein Verhalten des Feldgeräts (10) zu erzeugen, das an die Kompatibilitätsinformationen angepasst ist.

2. Feldgerät (10) nach Anspruch 1,
**dadurch gekennzeichnet, dass**
die Recheneinheit ausgebildet ist, die freigegebenen Funktionen (20, 22, 24, 26) derart auszuwählen, dass die freigegebenen Funktionen (20, 22, 24, 26) mittels der SPS angesteuert und genutzt werden können.

3. Feldgerät (10) nach Anspruch 1 oder 2,
**dadurch gekennzeichnet, dass**
die Recheneinheit ausgebildet ist, die zur Ausführung freigegebene Teilmenge der Funktionen (20, 22, 24, 26) während des Betriebs des Feldgeräts (10) auszuwählen.

4. Feldgerät (10) nach zumindest einem der vorstehenden Ansprüche,
**dadurch gekennzeichnet, dass**
die Kompatibilitätsinformationen eine Versionsinformation der SPS (30) enthalten.

5. Feldgerät (10) nach zumindest einem der vorstehenden Ansprüche,
**dadurch gekennzeichnet, dass**
die Kompatibilitätsinformationen eine gewünschte Version des Feldgeräts (10) enthalten.

6. Feldgerät (10) nach zumindest einem der vorstehenden Ansprüche,
**dadurch gekennzeichnet, dass**
sämtliche Funktionen der Firmware (14) denselben Firmwarekern (18) verwenden.

7. Feldgerät (10) nach zumindest einem der vorstehenden Ansprüche,
**dadurch gekennzeichnet, dass**
sämtliche Funktionen der Firmware (14) dieselbe Hardwareabstraktionsschicht (Hardware Abstraction Layer) (16) verwenden.

8. Feldgerät (10) nach zumindest einem der vorstehenden Ansprüche,
**dadurch gekennzeichnet, dass**
zumindest einer Funktion (20, 22, 24, 26) der Firmware (14) eine Versionsnummer und/oder ein Datum zugeordnet ist.

9. Feldgerät (10) nach zumindest einem der vorstehenden Ansprüche,
**dadurch gekennzeichnet, dass**
die Recheneinheit ausgebildet ist, die Funktionen (20, 22, 24, 26) mittels einer Bedingungsabfrage und/oder mittels einer Auswahl einer Vererbung freizugeben.

10. Feldgerät (10) nach zumindest einem der vorstehenden Ansprüche,
**dadurch gekennzeichnet, dass**
die Recheneinheit ausgebildet ist, für den Fall, dass keine der Funktionen (20, 22, 24, 26) geeignet ist, ein an die Kompatibilitätsinformationen angepasstes Verhalten des Feldgeräts (10) zu erzeugen, eine weitere Firmware (15) herunterzuladen und den Betrieb des Feldgeräts (10) mit der weiteren Firmware (15) fortzusetzen.

11. Feldgerät (10) nach zumindest einem der vorstehenden Ansprüche,
**dadurch gekennzeichnet, dass**
die weitere Firmware (15) ausschließlich an die Hardware (12) des Feldgeräts (10) angepasste weitere Funktionen umfasst.

12. Feldgerät (10) nach zumindest einem der vorstehenden Ansprüche,
**dadurch gekennzeichnet, dass**
die weitere Firmware (15) einen zu der Firmware (14) unterschiedlichen Firmwarekern (19) und/oder eine unterschiedliche Hardwareabstraktionsschicht (17) umfasst.

13. Verfahren zum Anschließen eines Feldgeräts (10) an eine speicherprogrammierbare Steuerung, SPS, wobei das Feldgerät (10) eine Firmware (14) mit einer Vielzahl von Funktionen (20, 22, 24, 26) umfasst,
**dadurch gekennzeichnet, dass**
das Feldgerät (10) mittels einer Datenschnittstelle Kompatibilitätsinformationen von der SPS (30) empfängt,
in Abhängigkeit der Kompatibilitätsinformationen eine Teilmenge der Funktionen (20, 22, 24, 26) der Firmware (14) zur Ausführung freigegeben werden, um ein Verhalten des Feldgeräts (10) zu erzeugen, das an die Kompatibilitätsinformationen der SPS (30) angepasst ist.

14. Computerprogramm mit Programmcode-Mitteln, die derart eingerichtet sind, dass ein Verfahren (10) nach Anspruch 13 durchgeführt wird, wenn das Programm auf einem Feldgerät (10) ausgeführt wird.

15. Computerprogrammprodukt mit Programmcode-Mitteln, die auf einem computerlesbaren Datenträger gespeichert sind und derart eingerichtet sind, dass ein Verfahren nach Anspruch 13 durchgeführt wird, wenn das Programmprodukt auf einem Feldgerät (10) ausgeführt wird.

## Claims

1. A field device (10), in particular an actuator control, for connection to a programmable logic controller, PLC (30), said field device (10) having hardware (12) comprising
a processing unit, a memory and a data interface for communication with the PLC (30),
wherein the field device (10) is configured to receive compatibility information, and
a firmware (14) having a plurality of functions (20, 22, 24, 26) for operating the field device (10) is stored in the memory,
**characterized in that**
the processing unit is configured to release a subset of the functions (20, 22, 24, 26) of the firmware (14) for execution in dependence on the compatibility information to produce a behavior of the field device (10) which is adapted to the compatibility information.

2. A field device (10) in accordance with claim 1,
**characterized in that**
the processing unit is configured to select the released functions (20, 22, 24, 26) such that the released functions (20, 22, 24, 26) can be controlled and used by means of the PLC.

3. A field device in accordance with claim 1 or claim 2,
**characterized in that**
the processing unit is configured to select the subset of the functions (20, 22, 24, 26) released for execution during the operation of the field device (10).

4. A field device (10) in accordance with at least one of the preceding claims,
**characterized in that**
the compatibility information includes version information of the PLC (30).

5. A field device (10) in accordance with at least one of the preceding claims,
**characterized in that**
the compatibility information includes a desired version of the field device (10).

6. A field device (10) in accordance with at least one of the preceding claims,
**characterized in that**
all functions of the firmware (14) use the same firmware kernel (18).

7. A field device (10) in accordance with at least one of the preceding claims,
**characterized in that**
all functions of the firmware (14) use the same hardware abstraction layer (16).

8. A field device (10) in accordance with at least one of the preceding claims,
**characterized in that**
a version number and/or a date is/are associated with at least one function (20, 22, 24, 26) of the firmware (14).

9. A field device (10) in accordance with at least one of the preceding claims,
**characterized in that**
the processing unit is configured to release the functions (20, 22, 24, 26) by means of a conditional request and/or by means of a selection of an inheritance.

10. A field device (10) in accordance with at least one of the preceding claims,
**characterized in that**
the processing unit is configured, for the case that none of the functions (20, 22, 24, 26) is suitable to produce a behavior of the field device (10) adapted to the compatibility information, to download a further firmware (15) and to continue the operation of the field device (10) with the further firmware (15).

11. A field device (10) in accordance with at least one of the preceding claims,
**characterized in that**
the further firmware (15) only comprises further functions adapted to the hardware (12) of the field device (10).

12. A field device (10) in accordance with at least one of the preceding claims,
**characterized in that**
the further firmware (15) comprises a firmware kernel (19) differing from the firmware (14) and/or a different hardware abstraction layer (17).

13. A method of connecting a field device (10) to a programmable logic controller, PLC, wherein the field device (10) comprises a firmware (14) having a plurality of functions (20, 22, 24, 26),
**characterized in that**
the field device (10) receives compatibility information from the PLC (30) by means of a data interface; and
a subset of the functions (20, 22, 24, 26) of the firmware (14) is released for execution in dependence on the compatibility information to produce a behavior of the field device (10) which is adapted to the compatibility information of the PLC (30).

14. A computer program having program code means which are adapted such that a method (10) in accordance with claim 13 is carried out when the program is executed on a field device (10).

15. A computer program product having program code means which are stored on a computer-readable data carrier and which are adapted such that a method in accordance with claim 13 is carried out when the program product is executed on a field device (10).

## Revendications

1. Appareil de terrain (10), en particulier commande d'actionneur, pour la connexion à un automate programmable industriel API (30), comportant un équipement informatique (12) comprenant une unité de calcul, une mémoire et une interface de données pour la communication avec l'API (30), l'appareil de terrain (10) étant réalisé pour recevoir des informations de compatibilité, et un micrologiciel (14) pourvu d'une multitude de fonctions (20, 22, 24, 26) pour faire fonctionner l'appareil de terrain (10) étant stocké dans la mémoire,
**caractérisé en ce que**
l'unité de calcul est réalisée pour libérer pour exécution un sous-ensemble des fonctions (20, 22, 24, 26) du micrologiciel (14) en fonction des informations de compatibilité, afin d'engendrer un comportement de l'appareil de terrain (10) qui est adapté aux informations de compatibilité.

2. Appareil de terrain (10) selon la revendication 1,
**caractérisé en ce que**
l'unité de calcul est réalisée pour sélectionner les fonctions libérées (20, 22, 24, 26) de telle sorte que les fonctions libérées (20, 22, 24, 26) peuvent être pilotées et utilisées au moyen de l'API.

3. Appareil de terrain (10) selon la revendication 1 ou 2,
**caractérisé en ce que**
l'unité de calcul est réalisée pour sélectionner le sous-ensemble des fonctions (20, 22, 24, 26) libéré pour exécution pendant le fonctionnement de l'appareil de terrain (10).

4. Appareil de terrain (10) selon l'une au moins des revendications précédentes,
**caractérisé en ce que**
les informations de compatibilité contiennent une information sur la version de l'API (30).

5. Appareil de terrain (10) selon l'une au moins des revendications précédentes,
**caractérisé en ce que**
les informations de compatibilité contiennent une version souhaitée de l'appareil de terrain (10).

6. Appareil de terrain (10) selon l'une au moins des revendications précédentes,
**caractérisé en ce que**
toutes les fonctions du micrologiciel (14) utilisent le même noyau de micrologiciel (18).

7. Appareil de terrain (10) selon l'une au moins des revendications précédentes,
**caractérisé en ce que**
toutes les fonctions du micrologiciel (14) utilisent la même couche d'abstraction matérielle (Hardware Abstraction Layer) (16).

8. Appareil de terrain (10) selon l'une au moins des revendications précédentes,
**caractérisé en ce que**
un numéro de version et/ou une date est/sont attribué(e)(s) à au moins une fonction (20, 22, 24, 26) du micrologiciel.

9. Appareil de terrain (10) selon l'une au moins des revendications précédentes,
**caractérisé en ce que**
l'unité de calcul est réalisée pour libérer les fonctions (20, 22, 24, 26) au moyen d'une interrogation sur les conditions et/ou d'une sélection d'un héritage informatique.

10. Appareil de terrain (10) selon l'une au moins des revendications précédentes,
**caractérisé en ce que**
l'unité de calcul est réalisée pour, si aucune des fonctions (20, 22, 24, 26) n'est apte à engendrer un comportement de l'appareil de terrain (10) adapté aux informations de compatibilité, télécharger un autre micrologiciel (15) et pour continuer à faire fonctionner l'appareil de terrain (10) avec ledit autre micrologiciel (15).

11. Appareil de terrain (10) selon l'une au moins des revendications précédentes,
**caractérisé en ce que**
l'autre micrologiciel (15) comprend exclusivement d'autres fonctions adaptées à l'équipement informatique (12) de l'appareil de terrain (10).

12. Appareil de terrain (10) selon l'une au moins des revendications précédentes,
**caractérisé en ce que**
l'autre micrologiciel (15) comprend un noyau de micrologiciel (19) différent de celui du micrologiciel (14) et/ou une couche d'abstraction matérielle (17) différente.

13. Procédé de connexion d'un appareil de terrain (10) à un automate programmable industriel, API, l'appareil de terrain (10) comprenant un micrologiciel (14) ayant une multitude de fonctions (20, 22, 24, 26),
**caractérisé en ce que**
l'appareil de terrain (10) reçoit des informations de compatibilité en provenance de l'API (30) au moyen d'une interface de données,
un sous-ensemble des fonctions (20, 22, 24, 26) du micrologiciel (14) est libéré pour exécution en fonction des informations de compatibilité, afin d'engendrer un comportement de l'appareil de terrain (10) qui est adapté aux informations de compatibilité de l'API (30).

14. Programme informatique comprenant des moyens de code de programme qui sont conçus pour mettre en œuvre un procédé (10) selon la revendication 13, lorsque le programme est exécuté sur un appareil de terrain (10).

15. Produit de programme informatique comprenant des moyens de code de programme stockés sur un support de données lisible par ordinateur et conçus pour mettre en œuvre un procédé selon la revendication 13, lorsque le produit de programme est exécuté sur un appareil de terrain (10).
